# EUROPÄISCHE PATENTSCHRIFT

(11) **EP 3 593 048 B1**
(45) Veröffentlichungstag und Bekanntmachung des Hinweises auf die Patenterteilung: **09.11.2022**
(21) Anmeldenummer: 18715503.1
(22) Anmeldetag: 15.03.2018
(51) Int. Cl.: F23R 3/00

(54) **SILOBRENNKAMMER UND VERFAHREN ZUM UMRÜSTEN EINER SOLCHEN**
SILO COMBUSTION CHAMBER AND METHOD FOR RETROFITTING SAME
CHAMBRE DE COMBUSTION DE TYPE SILO ET PROCÉDÉ POUR RÉ-ÉQUIPER LADITE CHAMBRE

(30) Priorität: 03.05.2017 DE 102017207392
(43) Veröffentlichungstag der Anmeldung: 15.01.2020
(73) Patentinhaber: Siemens Energy Global GmbH & Co. KG, 81739 München (DE)
(72) Erfinder: GAIO, Giuseppe, 53173 Bonn (DE); JÄKEL, Christian, 47169 Duisburg (DE); LINNEMANN, Katrin, 45359 Essen (DE); MOSQUERA RUIZ, Maria de la Paz, 45468 Mülheim an der Ruhr (DE); REHMANN, Sonja, 68723 Schwetzingen (DE); TERZIS, Petros, 40233 Düsseldorf (DE); VONNEMANN, Bernd, 45968 Gladbeck (DE); WINTERSTEIN, Michael, 41564 Kaarst (DE)
(86) Internationale Anmeldenummer: PCT/EP2018/056489
(87) Internationale Veröffentlichungsnummer: WO 2018/202350

(56) Entgegenhaltungen:
- EP-A1- 2 428 647
- WO-A2-2009/053417
- DE-A1- 4 114 768
- US-A1- 2016 201 912

## Beschreibung

Die vorliegende Erfindung betrifft eine Silobrennkammer umfassend ein sich vertikal erstreckendes, abwärts durchströmtes und von oben befeuertes Flammrohr, dessen Mantelfläche mit einer Vielzahl von Kühlfluidzuführöffnungen versehen und innen mit keramischen Hitzeschildelementen ausgekleidet ist, wobei sich die untersten Hitzeschildelemente an einem metallischen Stützring abstützen, ein stromabwärts des Flammrohrs angeordnetes, konisch zulaufendes Mischrohr, in das der untere Bereich des Flammrohrs eingelassen ist, und ein Außengehäuse, welches das Flammrohr und das Mischrohr unter Bildung eines ringförmigen Zuführkanals umgibt.

Silobrennkammern der eingangs genannten Art sind im Stand der Technik bekannt. So wird eine solche Silobrennkammer beispielsweise bei der SGT5-2000E eingesetzt, einem Gasturbinentyp der Siemens AG. Während des Betriebs der Gasturbine wird zunächst ein sauerstoffhaltiges Arbeitsgas - meist in der Form von Luft - unter Einsatz eines Verdichters verdichtet, wobei sich die Temperatur des Arbeitsgases erhöht und sein Druck steigt. Anschließend wird das Arbeitsgas in die Silobrennkammer eingeleitet, wo es innerhalb des Flammrohrs durch entsprechende Befeuerung weiter erhitzt wird. Das verdichtete und erhitzte Arbeitsgas wird dann über das Mischrohr einer Turbine zugeführt, in der es mechanische Arbeit verrichtet, indem es expandiert und dabei in bekannter Weise über Schaufeln die Turbine antreibt.

Innerhalb der Silobrennkammer herrschen während des Betriebs sehr hohe Temperaturen vor, wobei die höchsten Temperaturen innerhalb des Flammrohrs auftreten. Zum Schutz des Flammrohrs vor den hohen Temperaturen sind die Hitzeschildelemente vorgesehen. Darüber hinaus werden die Hitzeschildelemente und der Stützring gekühlt. Zur Kühlung werden Teilvolumenströme des der Silobrennkammer über den Zuführkanal zugeführten Arbeitsmediums verwendet, die zum einen über die Kühlfluidzuführöffnungen zu den Rückseiten der Hitzeschildelemente geleitet werden. Zum anderen werden diese durch Kühlkanäle des Stützrings geleitet, die in einem ungeschützten Bereich des Stützrings unterhalb einer sich im Wesentlichen horizontal erstreckenden ringförmigen Auflagefläche ausgebildet sind, auf der die untersten Hitzeschildelemente aufliegen.

Sämtliche Teilvolumenströme des Arbeitsfluids, die zum Zwecke der Kühlung eingesetzt werden, ziehen eine Reduzierung des Wirkungsgrads einer Strömungsmaschine nach sich. Vor diesem Hintergrund ist man stets bestrebt, Maßnahmen zu ergreifen, die den Kühlbedarf der Silobrennkammer oder Komponenten derselben reduzieren.

Weitere Brennkammern sind in der US 2016/0201912 A1 und der WO 2009/053417 A2 offenbart, wobei letztere Druckschrift den Oberbegriff des Anspruchs 1 offenbart. Die DE 41 14 768 A1 betrifft außerdem einen Hitzeschild.

Ausgehend von diesem Stand der Technik ist es eine Aufgabe der vorliegenden Erfindung, eine Silobrennkammer der eingangs genannten Art mit alternativem Aufbau zu schaffen, der einen vergleichsweise geringen Kühlbedarf nach sich zieht.

Zur Lösung dieser Aufgabe schafft die vorliegende Erfindung eine Silobrennkammer der eingangs genannten Art, die dadurch gekennzeichnet ist, dass die untersten Hitzeschildelemente die radial einwärts weisenden Flächen des Stützrings vollständig bedecken. Entsprechend sind die zum Innern des Flammrohrs weisenden Bereiche des Stützrings im Gegensatz zum Stand der Technik vollständig durch die Hitzeschildelemente geschützt. Es hat sich herausgestellt, dass dank dieser Ausgestaltung eine zusätzliche Kühlung des metallischen Stützrings entfallen kann, was zu einer Reduzierung des für die Kühlung benötigten Kühlfluidvolumenstroms und damit zu einer Erhöhung des Wirkungsgrads derjenigen Strömungsmaschine beiträgt, in der die erfindungsgemäße Silobrennkammer verwendet wird.

Gemäß einer Ausgestaltung der vorliegenden Erfindung weist der Stützring eine umlaufende, sich im Wesentlichen horizontal erstreckende Auflagefläche auf, auf der die untersten Hitzeschildelemente jeweils mit einer Kontaktfläche aufliegen, wobei die untersten Hitzeschildelemente sich ausgehend von der Kontaktfläche abwärts erstreckende, radial einwärts weisenden Flächen des Stützrings bedeckende Vorsprünge aufweisen. Dank solcher Vorsprünge können die radial einwärts weisenden Flächen des Stützrings bei weiterhin einfachem Aufbau der Hitzeschildelemente in einfacher Weise vollständig bedeckt werden.

Ferner schafft die vorliegende Erfindung ein Verfahren zum Umrüsten einer Silobrennkammer, die ein sich vertikal erstreckendes, abwärts durchströmtes und von oben befeuertes Flammrohr, dessen Mantelfläche mit einer Vielzahl von Kühlfluidzuführöffnungen versehen und innen mit keramischen Hitzeschildelementen ausgekleidet ist, wobei sich die untersten Hitzeschildelemente an einem metallischen Stützring abstützen, der eine umlaufende, sich im Wesentlichen horizontal erstreckende Auflagefläche aufweist, auf der die untersten Hitzeschildelemente jeweils mit einer Kontaktfläche aufliegen, und mit einer Vielzahl von sich radial erstreckenden Kühlfluidbohrungen versehen ist, ein stromabwärts des Flammrohrs angeordnetes, konisch zulaufendes Mischrohr, in das der untere Bereich des Flammrohrs eingelassen ist, und ein Außengehäuse umfasst, welches das Flammrohr und das Mischrohr unter Bildung eines ringförmigen Zuführkanals umgibt, umfassend die Schritte:
a) Entfernen der untersten Hitzeschildelemente und
b) Ersetzen der entfernten untersten Hitzeschildelemente durch Ersatzhitzeschildelemente, die sich ausgehend von ihrer Kontaktfläche abwärts erstreckende, Teile der Innenseite des Stützrings bedeckende Vorsprünge aufweisen.

Dank des erfindungsgemäßen Verfahrens kann durch einfachen Austausch der untersten Hitzeschildelemente der Wirkungsgrad derjenigen Strömungsmaschine, in der die Silobrennkammer eingesetzt wird, wesentlich verbessert werden, da eine zusätzliche Kühlung des Stützrings entfallen kann.

Gemäß einer Ausgestaltung des erfindungsgemäßen Verfahrens werden zwischen den Schritten a) und b) die Kühlfluidbohrungen des Stützrings verschlossen, insbesondere unter Einsatz eines Schweißverfahrens. Auf diese Weise werden unerwünschte Leckageströme durch die Kühlfluidbohrungen des Stützrings während des Betriebs der Silobrennkammer verhindert.

Bevorzugt wird in einem weiteren Schritt die Auflagefläche des Stützrings durch umfänglichen Materialabtrag in radialer Richtung verkleinert. Dies führt dazu, dass die Dicke des den Stützring unterhalb seiner Auflagefläche abdeckenden Vorsprungs der jeweiligen Ersatzhitzeschildelemente vergrößert werden kann, wodurch die thermisch isolierende Wirkung der Ersatzhitzeschildelemente in diesem Bereich verbessert wird.

Weitere Merkmale und Vorteile der vorliegenden Erfindung werden anhand der nachfolgenden Beschreibung eines Verfahrens gemäß einer Ausführungsform der vorliegenden Erfindung unter Bezugnahme auf die beiliegende Zeichnung deutlich. Darin ist
- Figur 1: eine schematische geschnittene Teilansicht einer Silobrennkammer, wie sie bereits heute eingesetzt wird;
- Figur 2: eine vergrößerte Ansicht des in Figur 1 mit der Bezugsziffer II gekennzeichneten Ausschnitts;
- Figur 3: eine vergrößerte Ansicht analog zu Figur 2 nach der Durchführung eines Verfahrens gemäß einer Ausführungsform der vorliegenden Erfindung; und
- Figur 4: eine vergrößerte Ansicht analog zu Figur 2 nach der Durchführung eines Verfahrens gemäß einer weiteren Ausführungsform der vorliegenden Erfindung.

Gleiche Bezugsziffern beziehen sich nachfolgend auf gleiche oder gleichartige Bauteile bzw. Komponenten.

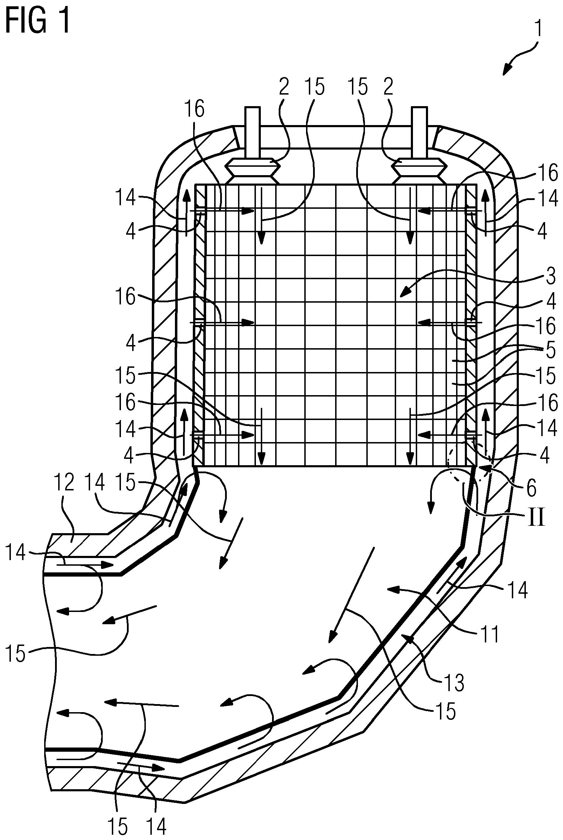

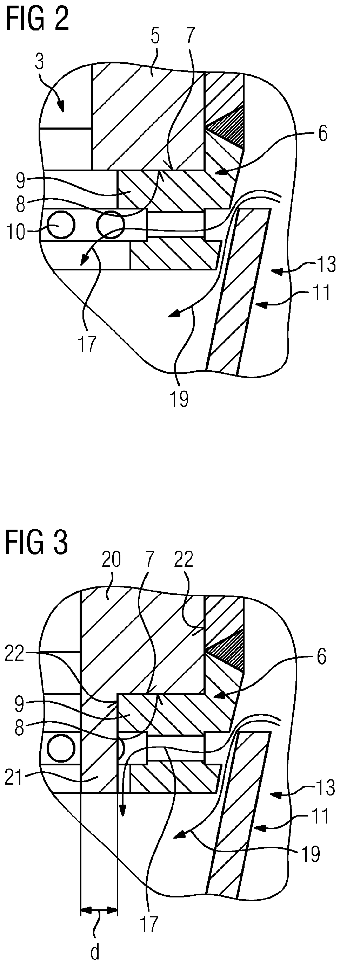

Die Figuren 1 und 2 zeigen Teilbereiche einer bekannten Silobrennkammer 1, wie sie beispielsweise bei der SGT5-2000E eingesetzt wird, ein Gasturbinentyp der Siemens AG. Die Silobrennkammer 1 umfasst ein sich vertikal erstreckendes, abwärts durchströmtes von oben über eine Mehrzahl von Brennern 2 befeuertes Flammrohr 3, dessen Mantelfläche entlang ihres Umfangs mit einer Vielzahl von verteilt angeordneten Kühlfluidzuführöffnungen 4 versehen und innen mit keramischen Hitzeschildelementen 5 ausgekleidet ist. Im unteren Bereich des Flammrohrs 3 ist ein metallischer Stützring 6 vorgesehen, an dem sich die untersten Hitzeschildelemente 5 abstützen. Der Stützring 6 weist hierzu eine umlaufende, sich im Wesentlichen horizontal erstreckende Auflagefläche 7 auf, auf der die untersten Hitzeschildelemente 5 jeweils mit einer Kontaktfläche 8 aufliegen. Der die Auflagefläche 7 definierende ringförmige Absatz 9 des Stützrings 6 ist entlang seines Umfangs mit einer Vielzahl von Kühlfluidbohrungen 10 versehen, die sich jeweils in radialer Richtung durch den gesamten Stützring 6 hindurch erstrecken. Die Silobrennkammer 1 umfasst ferner ein stromabwärts des Flammrohrs 3 angeordnetes, konisch zulaufendes, vorliegend gebogen ausgebildetes Mischrohr 11, in das der untere Bereich des Flammrohrs 3 eingelassen ist. Als weitere Komponente weist die Silobrennkammer 1 ein Außengehäuse 12 auf, welches das Flammrohr 3 und das Mischrohr 11 unter Bildung eines ringförmigen Zuführkanals 13 umgibt.

Während des Betriebs wird ein sauerstoffhaltiges Arbeitsgas unter Einsatz eines nicht näher dargestellten Verdichters verdichtet, wobei sich die Temperatur des Arbeitsgases erhöht und sein Druck steigt. Anschließend wird das Arbeitsgas in Richtung der Pfeile 14 über den Zuführkanal 13 in die Silobrennkammer 1 eingeleitet und dem Flammrohr 3 zugeführt, wo es durch entsprechende Befeuerung unter Einsatz der Brenner 2 weiter erhitzt wird. Das verdichtete und erhitzte Arbeitsgas wird dann über das Mischrohr 11 in Richtung der Pfeile 15 einer nicht näher dargestellten Turbine zugeführt, in der es mechanische Arbeit verrichtet, indem es expandiert und dabei über Schaufeln die Turbine antreibt.

Zur Kühlung der Hitzeschildelemente 5 werden Teilvolumenströme des durch den Zuführkanal 13 geleiteten Arbeitsgases durch die Kühlfluidzuführöffnungen 4 zu den Rückseiten der jeweiligen Hitzeschildelemente 5 geleitet, von denen sie Wärme aufnehmen, woraufhin sie in das Flammrohr 3 eintreten, wie es durch die Pfeile 16 gekennzeichnet ist, und anschließend der Turbine in Richtung der Pfeile 15 zugeführt werden. Weitere Teilvolumenströme des Arbeitsgases werden durch die Kühlfluidbohrungen 10 des Stützrings 6 entsprechend der Pfeile 17 geleitet und dann in Richtung der Pfeile 15 der Turbine zugeführt.

Ein weiterer Teilvolumenstrom passiert einen zwischen den Stützringen 6 und dem Mischrohr 11 vorhandenen Ringspalt 18, wie es durch den Pfeil 19 dargestellt ist.

Figur 3 zeigt eine Modifikation der Silobrennkammer 1 im Bereich des Stützringes 6 nach der Durchführung eines Verfahrens gemäß einer Ausführungsform der vorliegenden Erfindung. Bei diesem Verfahren wurden die untersten Hitzeschildelemente 5 in einem ersten Schritt entfernt. In einem weiteren Schritt wurden die entfernten untersten Hitzeschildelemente 5 durch Ersatzhitzeschildelemente 20 ersetzt, die sich ausgehend von ihrer Kontaktfläche 8 abwärts erstreckende, die Innenseite des Stützrings 6 bedeckende Vorsprünge 21 aufweisen. Dies führt dazu, dass die Ersatzhitzeschildelemente 20 nunmehr die radial einwärts weisenden Flächen 22 des Stützrings 6 vollständig bedecken, so dass der gesamte Stützring 6 vor den in dem Flammrohr 3 vorherrschenden hohen Temperaturen durch die Ersatzhitzeschildelemente 20 geschützt ist. Wie es in Figur 3 zu erkennen ist, wird auf diese Weise auch der durch den Stützring 6 geleitete Teilvolumenstrom reduziert, wodurch der Wirkungsgrad derjenigen Strömungsmaschine, in der die Silobrennkammer 1 eingesetzt wird, verbessert wird.

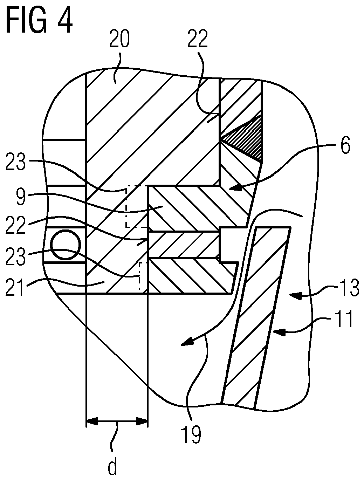

Figur 4 zeigt eine Ansicht ähnlich Figur 3, die sich nach der Durchführung eines Verfahrens gemäß einer weiteren Ausführungsform der vorliegenden Erfindung ergibt. Bei dieser Variante werden die untersten Hitzeschildelemente 5 in einem ersten Schritt entfernt. In einem zweiten Schritt werden die Auflageflächen 7 des Stützrings 6 durch umfänglichen Materialabtrag in radialer Richtung verkleinert, wobei die abgetragenen Bereiche in Figur 4 zur besseren Veranschaulichung weiterhin eingezeichnet und mit der Bezugsziffer 23 versehen sind. In einem dritten Schritt werden die Kühlfluidbohrungen 10 des Stützrings 6 verschlossen, wozu vorliegend ein Schweißverfahren eingesetzt wird. In einem letzten Schritt werden die entfernten untersten Hitzeschildelemente 5 durch Ersatzhitzeschildelemente 20 ersetzt, die sich ausgehend von ihrer Kontaktfläche 8 abwärts erstreckende, die Innenseite des Stützrings bedeckende Vorsprünge 21 aufweisen.

Die in Figur 4 dargestellte Anordnung ist gegenüber der in Figur 3 dargestellten Anordnung zum einen dahingehend vorteilhaft, dass die durch den Stützring 6 geleiteten Teilvolumenströme vollständig eliminiert sind. Ferner ist die Dicke d des den Stützring 6 unterhalb seiner Auflagefläche 7 abdeckenden Vorsprungs 21 des in Figur 4 dargestellten Ersatzhitzeschildelementes 20 größer als die entsprechende Dicke d des in Figur 3 dargestellten Vorsprungs 1, was Dank des im dritten Verfahrensschritt erfolgten Materialabtrags ermöglicht wird. Auf diese Weise wird die thermisch isolierende Wirkung der Ersatzhitzeschildelemente 20 im unteren Bereich des Stützrings 6 verbessert.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen. So können auch bei der in Figur 3 dargestellten Anordnung die Kühlfluidbohrungen 10 des Stützrings 6 in einem weiteren Verfahrensschritt verschlossen werden, um nur ein Beispiel zu nennen.

## Patentansprüche

1. Silobrennkammer (1) umfassend
- ein sich vertikal erstreckendes, abwärts durchströmtes und von oben befeuertes Flammrohr (3), dessen Mantelfläche mit einer Vielzahl von Kühlfluidzuführöffnungen (4) versehen und innen mit keramischen Hitzeschildelementen (5, 20) ausgekleidet ist, wobei sich die untersten Hitzeschildelemente (20) an einem metallischen Stützring (6) mit radial einwärts weisenden Flächen (22) abstützen;
- ein stromabwärts des Flammrohrs (3) angeordnetes, konisch zulaufendes Mischrohr (11), in das der untere Bereich des Flammrohrs (3) eingelassen ist; und
- ein Außengehäuse (12), welches das Flammrohr (3) und das Mischrohr (11) unter Bildung eines ringförmigen Zuführkanals (13) umgibt,
**dadurch gekennzeichnet, dass**
die untersten Hitzeschildelemente (20) die radial einwärts weisenden Flächen des Stützrings (6) vollständig bedecken.

2. Silobrennkammer (1) nach Anspruch 1,
**dadurch gekennzeichnet, dass**
der Stützring (6) eine umlaufende, sich im Wesentlichen horizontal erstreckende Auflagefläche (7) aufweist, auf der die untersten Hitzeschildelemente (5) jeweils mit einer Kontaktfläche (8) aufliegen, und
dass sich die untersten Hitzeschildelemente (20) ausgehend von der Kontaktfläche (8) abwärts erstreckende, radial einwärts weisenden Flächen (22) des Stützrings (6) bedeckende Vorsprünge (21) aufweisen.

3. Verfahren zum Umrüsten einer Silobrennkammer (1),
die ein sich vertikal erstreckendes, abwärts durchströmtes und von oben befeuertes Flammrohr (3), dessen Mantelfläche mit einer Vielzahl von Kühlfluidzuführöffnungen (4) versehen und innen mit keramischen Hitzeschildelementen (5) ausgekleidet ist,
wobei sich die untersten Hitzeschildelemente (5) an einem metallischen Stützring (6) abstützen, der eine umlaufende, sich im Wesentlichen horizontal erstreckende Auflagefläche (7) aufweist, auf der die untersten Hitzeschildelemente (5) jeweils mit einer Kontaktfläche (8) aufliegen, und der metallische Stützring weiterhin eine radial einwärts weisende Fläche (22) aufweist, wobei der Stützring (6) der mit einer Vielzahl von sich radial erstreckenden Kühlfluidbohrungen (10) versehen ist, ein stromabwärts des Flammrohrs (3) angeordnetes, konisch zulaufendes Mischrohr (11), in welches der untere Bereich des Flammrohrs (3) eingelassen ist, und ein Außengehäuse (12) umfasst, welches das Flammrohr (3) und das Mischrohr (11) unter Bildung eines ringförmigen Zuführkanals (13) umgibt, umfassend die Schritte:
a) Entfernen der untersten Hitzeschildelemente (5) und
b) Ersetzen der entfernten untersten Hitzeschildelemente (5) durch Ersatzhitzeschildelemente (20), die sich ausgehend von ihrer Kontaktfläche (8) abwärts erstreckende, Teile der Innenseite des Stützrings (6) bedeckende Vorsprünge (21) aufweisen, welche die radial einwärts weisenden Flächen des Stützrings (6) vollständig bedecken.

4. Verfahren nach Anspruch 3,
**dadurch gekennzeichnet, dass**
zwischen den Schritten a) und b) die Kühlfluidbohrungen (10) des Stützrings (6) verschlossen werden, insbesondere unter Einsatz eines Schweißverfahrens.

5. Verfahren nach Anspruch 3 oder 4,
**dadurch gekennzeichnet, dass**
in einem weiteren Schritt die Auflagefläche (7) des Stützrings (6) durch umfänglichen Materialabtrag in radialer Richtung verkleinert wird.

## Claims

1. Silo combustion chamber (1) comprising
- a vertically extending flame tube (3) flowed through in a downward direction and fired from above, the casing surface of which flame tube is provided with a multiplicity of cooling-fluid feed openings (4) and is lined internally with ceramic heat-shield elements (5, 20), wherein the lowermost heat-shield elements (20) are supported against a metallic support ring (6) with radially inwardly facing surfaces (22);
- a conically tapering mixing tube (11) which is arranged downstream of the flame tube (3) and into which the lower region of the flame tube (3) is sunk; and
- an outer housing (12) which surrounds the flame tube (3) and the mixing tube (11) such that a ring-shaped feed channel (13) is formed,
**characterized in that**
the lowermost heat-shield elements (20) completely cover the radially inwardly facing surfaces of the support ring (6).

2. Silo combustion chamber (1) according to Claim 1, **characterized in that**
the support ring (6) has an encircling, substantially horizontally extending bearing surface (7) on which the lowermost heat-shield elements (5) each bear with a contact surface (8), and
**in that** the lowermost heat-shield elements (20) have projections (21) which extend downwards from the contact surface (8) and which cover radially inwardly facing surfaces (22) of the support ring (6).

3. Method for converting a silo combustion chamber (1), which comprises a vertically extending flame tube (3) flowed through in a downward direction and fired from above, the casing surface of which flame tube is provided with a multiplicity of cooling-fluid feed openings (4) and is lined internally with ceramic heat-shield elements (5),
wherein the lowermost heat-shield elements (5) are supported against a metallic support ring (6) which has an encircling, substantially horizontally extending bearing surface (7) on which the lowermost heat-shield elements (5) each bear with a contact surface (8), and the metallic support ring furthermore has a radially inwardly facing surface (22), wherein the support ring (6) is provided with a multiplicity of radially extending cooling-fluid bores (10), comprises a conically tapering mixing tube (11) which is arranged downstream of the flame tube (3) and into which the lower region of the flame tube (3) is sunk, and comprises an outer housing (12) which surrounds the flame tube (3) and the mixing tube (11) such that a ring-shaped feed channel (13) is formed, comprising the steps of:
a) removing the lowermost heat-shield elements (5), and
b) replacing the removed lowermost heat-shield elements (5) with replacement heat-shield elements (20) having projections (21) which extend downwards from their contact surface (8) and cover parts of the inner side of the support ring (6), which completely cover the radially inwardly facing surfaces of the support ring (6).

4. Method according to Claim 3,
**characterized in that**,
between the steps a) and b), the cooling-fluid bores (10) of the support ring (6) are closed off, in particular using a welding process.

5. Method according to Claim 3 or 4,
**characterized in that**,
in a further step, the bearing surface (7) of the support ring (6) is reduced in size by radial removal of material over the circumference.

## Revendications

1. Chambre de combustion (1) de type silo comprenant
- un tube (3) de flamme s'étendant verticalement, parcouru en descendant et alimenté par le haut, dont la surface latérale est pourvue d'une pluralité d'ouvertures (4) d'apport de fluide de refroidissement et est habillée intérieurement d'éléments (5, 20) céramiques formant bouclier thermique, dans lequel les éléments (20) les plus bas formant bouclier thermique s'appuient sur un anneau (6) métallique d'appui ayant des surfaces (22) tournées vers l'intérieur radialement ;
- un tube (11) de mélange, qui est disposé en aval du tube (3) de flamme, qui arrive coniquement et dans lequel la partie inférieure du tube (3) de flamme est insérée ; et
- une enveloppe (12) extérieure, qui entoure le tube (3) de flamme et le tube (11) de mélange en formant un conduit (13) annulaire d'apport,
**caractérisée en ce que**
les éléments (20) les plus bas formant bouclier thermique recouvrent complètement les surfaces, tournées vers l'intérieur radialement, de l'anneau (6) d'appui.

2. Chambre de combustion (1) du type en silo suivant la revendication 1,
**caractérisée en ce que**
l'anneau (6) d'appui a une surface (7) de support faisant le tour, s'étendant sensiblement horizontalement et sur laquelle reposent les éléments (5) les plus bas formant bouclier thermique respectivement par une surface (8) de contact, et
**en ce que** les éléments (20) les plus bas formant bouclier thermique ont des saillies (21), s'étendant vers le bas à partir de la surface (8) de contact et recouvrant des surfaces (22), tournées vers l'intérieur radialement, de l'anneau (6) d'appui.

3. Procédé pour équiper une chambre de combustion (1) en silo, qui est pourvue d'un tube (3) de flamme, s'étendant verticalement, parcourue vers le bas et alimenté par le haut, dont la surface latérale a une pluralité d'ouvertures (4) d'apport de fluide de refroidissement et est habillée à l'intérieur d'éléments (5) céramiques formant bouclier thermique,
dans lequel les éléments (5) les plus bas formant bouclier thermique s'appuient sur un anneau (6) métallique d'appui, qui a une surface (7) de support, qui fait le tour, qui s'étend sensiblement horizontalement et sur laquelle les éléments (5) les plus bas formant bouclier thermique reposent respectivement par une surface (8) de contact, et l'anneau métallique d'appui a en outre une surface (22) tournée vers l'intérieur radialement, dans lequel l'anneau (6) d'appui est pourvu d'une pluralité de trous (10) pour du fluide de refroidissement s'étendant radialement, comprend un tube (11) de mélange, disposé en aval du tube (3) de flamme, arrivant coniquement et dans lequel la partie inférieure du tube (3) de flamme est insérée et une enveloppe (12) extérieure, qui entoure le tube (3) de flamme et le tube (11) de mélange en formant un conduit (13) annulaire d'apport, comprenant les stades :
a) on retire les éléments (5) les plus bas formant bouclier thermique et
b) on remplace les éléments (5) les plus bas formant bouclier thermique, qui ont été retirés, par des éléments (20) formant bouclier thermique de remplacement, qui s'étendent vers le bas à partir de leurs surfaces (8) de contact, qui ont des saillies (21), qui recouvrent des parties du côté intérieur de l'anneau (6) d'appui et qui recouvrent complètement les surfaces vers l'intérieur radialement de l'anneau (6) d'appui.

4. Procédé suivant la revendication 3,
**caractérisé en ce qu'**
on ferme, notamment par un procédé de soudure, entre les stades a) et b), les trous (10) pour du fluide de refroidissement de l'anneau (6) d'appui.

5. Procédé suivant la revendication 3 ou 4,
**caractérisé en ce que**
dans un autre stade, on rapetisse dans la direction radiale la surface (7) de support de l'anneau (6) d'appui, par enlèvement de matériau sur le pourtour.
